# FASCICULE DE BREVET EUROPEEN

(11) **EP 0 860 693 B1**
(45) Date de publication et mention de la délivrance du brevet: **16.10.2002**
(21) Numéro de dépôt: 98400135.4
(22) Date de dépôt: 22.01.1998
(51) Int. Cl.: G01M 17/007

(54) **Piste d'essai multi-adhérence**
Multi-Adhäsion Teststrecke
Multi-adherence test track

(30) Priorité: 25.02.1997 FR 9702239
(43) Date de publication de la demande: 26.08.1998
(73) Titulaire: AUTOMOBILES PEUGEOT, 75116 Paris (FR); COLAS, 92100 Boulogne-Billancourt (FR); AUTOMOBILES CITROEN, 92200 Neuilly-sur-Seine (FR)
(72) Inventeur: Dreau, Pierre, 25400 Exencourt (FR); Thomassey, Bernhard, 70120 Melincourt (FR)
(74) Mandataire: Moncheny, Michel

(56) Documents cités:
- EP-A- 0 726 361
- DE-A- 3 515 896
- US-A- 5 054 954
- PATENT ABSTRACTS OF JAPAN vol. 011, no. 100 (P-561), 28 mars 1987 & JP 61 251738 A (MAZDA MOTOR CORP), 8 novembre 1986,
- PATENT ABSTRACTS OF JAPAN vol. 011, no. 100 (P-561), 28 mars 1987 & JP 61 251737 A (MAZDA MOTOR CORP), 8 novembre 1986,
- PATENT ABSTRACTS OF JAPAN vol. 011, no. 100 (P-561), 28 mars 1987 & JP 61 251736 A (MAZDA MOTOR CORP), 8 novembre 1986,
- PATENT ABSTRACTS OF JAPAN vol. 014, no. 191 (P-1038), 18 avril 1990 & JP 02 036331 A (HITACHI LTD), 6 février 1990,
- PATENT ABSTRACTS OF JAPAN vol. 015, no. 350 (M-1154), 5 septembre 1991 & JP 03 137304 A (OSAMU WATANABE), 11 juin 1991,
- PATENT ABSTRACTS OF JAPAN vol. 006, no. 082 (P-116), 20 mai 1982 & JP 57 020643 A (MAZDA MOTOR CORP), 3 février 1982,
- PATENT ABSTRACTS OF JAPAN vol. 096, no. 010, 31 octobre 1996 & JP 08 144208 A (SUMITOMO RUBBER IND LTD), 4 juin 1996,

## Description

La présente invention concerne les pistes d'essai pour véhicules, du type décrit dans le préambule de la revendication 1.

De telles pistes sont utilisées pour évaluer le comportement de véhicules et/ou de leurs équipements sur différents types de revêtement. De telles pistes sont en particulier utilisées pour tester les capacités de freinage d'un véhicule automobile.

Les pistes d'essais sont généralement constituées de tronçons successifs, voir par exemple Patent Abstract of Japan 61251738, soumis à un arrosage, tel que montré dans DE 35 15 896 A1 et présentant en surface des adhérences différentes à l'état mouillé. Ces tronçons simulent par exemple l'adhérence de la neige tassée ou de la glace. Un véhicule équipé des capteurs adéquats est alors lancé sur la piste et effectue des freinages successifs sur les différents tronçons. Les mesures ainsi obtenues permettent d'évaluer le comportement du véhicule sur les différentes surfaces rencontrées.

Cependant, ces mesures ne permettent de connaître le comportement du véhicule ou de ses équipements que lorsque celui-ci se trouve sur une surface homogène, puisque les roues gauches et droites du véhicule testé se trouvent en permanence sur le même revêtement lors des essais. Ces pistes ne permettent donc pas de simuler des situations telles que la présence de plaques de verglas et plus généralement des situations d'instabilité, d'inhomogénéité de la route, où les quatre roues de la voiture peuvent être soumises à des revêtements d'adhérences différentes, situations auxquelles les véhicules sont fréquemment confrontés lors de leur usage.

L'invention a pour but de remédier aux inconvénients mentionnés précédemment et en particulier de fournir une piste d'essai pour véhicules permettant de simuler la présence d'inhomogénéités sur un revêtement routier, d'effectuer des mesures différentielles entre les roues du véhicule testé et donc de mieux connaître son comportement ou celui de ses équipements.

A cet effet, l'invention a pour objet une piste d'essai du type précité, caractérisée par le contenu de la partie caractérisante de la revendication 1.

La piste d'essai selon l'invention peut comporter une ou plusieurs des caractéristiques décrites dans les sous-revendications.

L'invention sera mieux comprise à la lecture de la description qui va suivre, donnée uniquement à titre d'exemple, et faite en se référant aux dessins annexés sur lesquels :
- la figure 1 est une vue schématique en plan d'une piste selon l'invention,
- la figure 2 est une vue partielle en coupe transversale prise suivant la ligne II-II de la figure 1,
- la figure 3 est une vue de dessus, à plus grande échelle, d'un pavé de verre de la piste de la figure 1,
- la figure 4 est une vue partielle en coupe transversale prise selon la ligne IV-IV de la figure 1,
- la figure 5 est une vue de détail de la partie cerclée V de la figure 4,
- la figure 6 est une vue schématique en plan de la piste de la figure 1 et de son installation d'arrosage,
- la figure 7 est une vue partielle en coupe transversale suivant la ligne VII-VII de la figure 6.

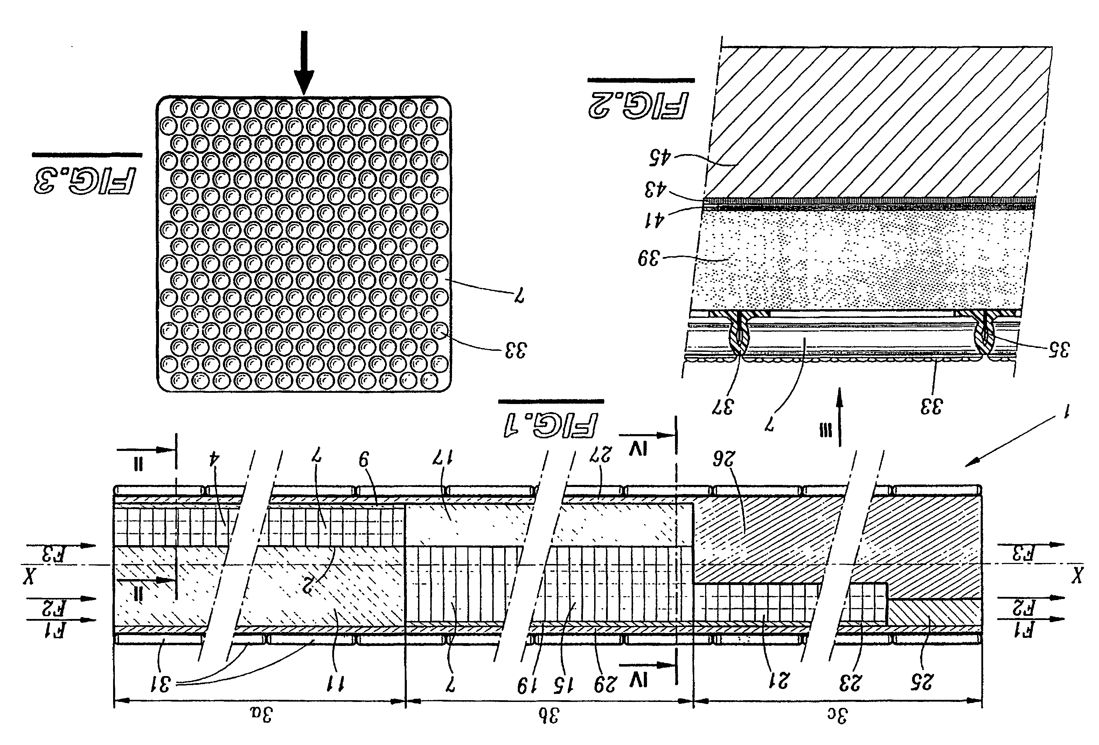

Les figures 1 à 7 représentent une piste d'essai rectiligne 1 pour véhicules automobiles selon l'invention. Cette piste est partagée en trois tronçons successifs 3a, 3b, 3c, par exemple de même longueur.

Le premier tronçon 3a de la piste 1 est partagé dans le sens de sa longueur, c'est-à-dire par une ligne longitudinale 2, en une bande 4, revêtue de pavés de verre 7 et présentant sur son bord extérieur une fine bande revêtue de plaques de basaltine polie 9, et une bande 11 revêtue de plaques de basaltine polie de largeur sensiblement double de celle de la première bande 4.

Ces deux bandes d'essai sont prolongées sur le deuxième tronçon 3b, en deux autres bandes d'essai 15, 17 de même largeur respectivement et dont le revêtement est alterné par rapport aux deux premières bandes 4, 11. La bande 15 est donc revêtue de pavés de verre 7 et présente sur son bord extérieur une fine bande 19 revêtue de plaques de basaltine polie, et la bande 17 est revêtue de plaques de basaltine polie. La bande 15 est prolongée, sur une partie du troisième tronçon 3c, sur sa partie longeant le bord de la piste 1, en une autre bande d'essai 21 revêtue de pavés de verre 7. La fine bande 19 revêtue de plaques de basaltine polie est semblablement prolongée, sur la longueur de la bande 21, en une bande 23 revêtue de plaques de basaltine polie. La bande 21 est elle-même prolongée sur la partie extérieure de sa largeur et sur celle de la bande 23, et jusqu'à la fin du tronçon 3c, en une bande d'essai 25 revêtue de plaques de basaltine polie.

Le reste de la piste est constitué par une zone 26 recouverte d'enrobé.

La piste 1 est en outre bordée sur toute sa longueur par deux fines bandes d'enrobé 27, 29 et par deux alignements de boudins étanches 31 gonflés d'air à basse pression et fixés au sol par des câbles élastiques non représentés.

Les figures 2 et 3 montrent la constitution des zones de la piste revêtues de pavés de verre 7. Ces pavés comportent en surface des reliefs non jointifs 33 en forme de calotte sphérique. Ces reliefs sont tous de même hauteur et sont disposés en quinconce par rapport à la direction de déplacement des véhicules sur la piste, direction indiquée par une flèche sur la figure 3. Ces pavés sont maintenus entre eux par une armature comprenant un réseau à mailles quadrangulaires de fers plats entrecroisés 35 et par des joints souples 37, comme décrit dans les demandes de brevet FR 2 691 485 et FR 2 699 944.

Ce revêtement de pavés de verre et son armature reposent sur une couche drainante de béton poreux 39, puis sur une couche de Géotextile ^{T.M} 41 s'appuyant elle-même sur une couche étanche 43. Cette dernière est posée sur la couche de fondation de la piste 45, réalisée en Compasphalt ^{T.M}.

L'axe longitudinal médian X-X de la piste, qui traverse les zones 11, 15 et 26, est surélevé par rapport aux deux bords latéraux de la piste, de sorte que la piste est partagée, par rapport à celui-ci, en deux parties inclinées symétriquement en toit vers les bords de la piste.

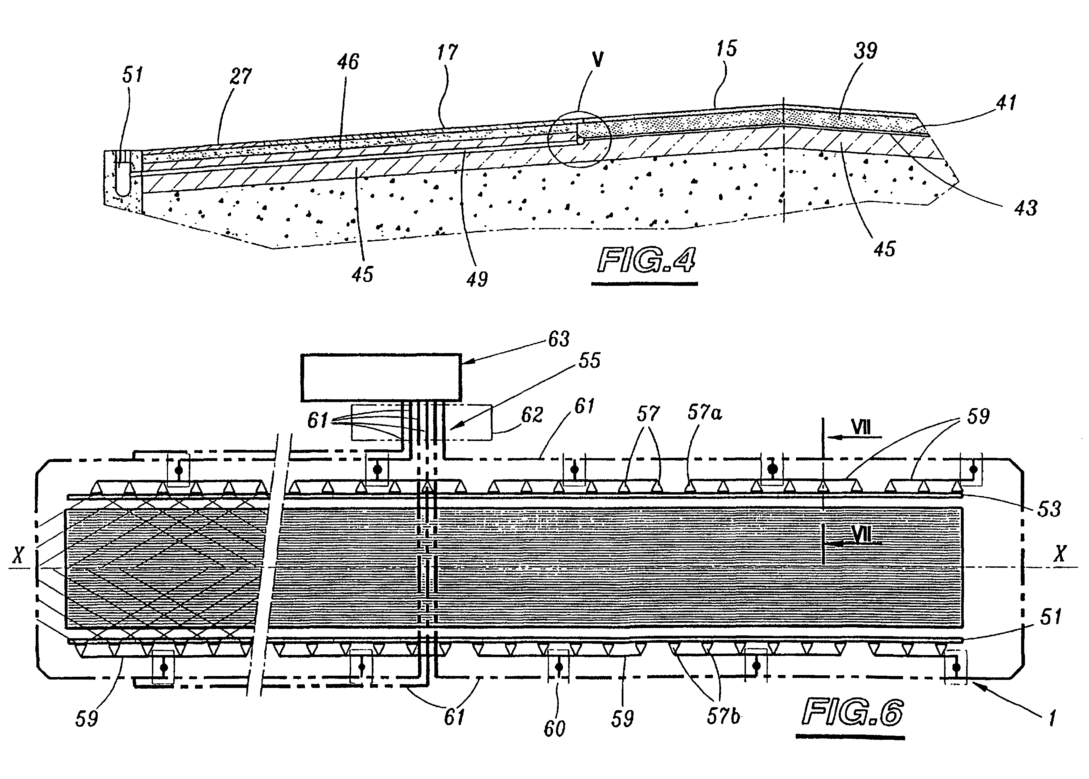

La figure 4 est une vue partielle en coupe de la piste 1 selon la ligne IV-IV de la figure 1. Elle montre la constitution des zones revêtues de plaques de basaltine polie ou d'enrobé, ainsi que le raccordement longitudinal des différentes zones. Le revêtement d'enrobé de la bande 27 et le revêtement de basaltine polie de la bande 17 sont tous les deux de même épaisseur et s'appuient sur une couche de Compoflex ^{T.M.} 46 qui repose directement sur la couche de fondation 45 de la piste.

La figure 5 est une vue agrandie de la partie cerclée V de la figure 4, montrant la jonction longitudinale des zones 15 et 17. Un drain longitudinal 47 situé sous la couche 41 parcourt toute la jonction et communique avec des conduites d'évacuation 49 prévues dans la couche de fondation 45 et réparties uniformément sur toute la longueur de la jonction. Ce drain est noyé dans du bitume d'étancheur 48. De tels agencements sont prévus le long de toutes les jonctions longitudinales des zones 4 et 11, 15 et 17, 21 et 26.

Les conduites d'évacuation 49 débouchent dans des caniveaux de récupération 51, 53, longeant la piste 1.

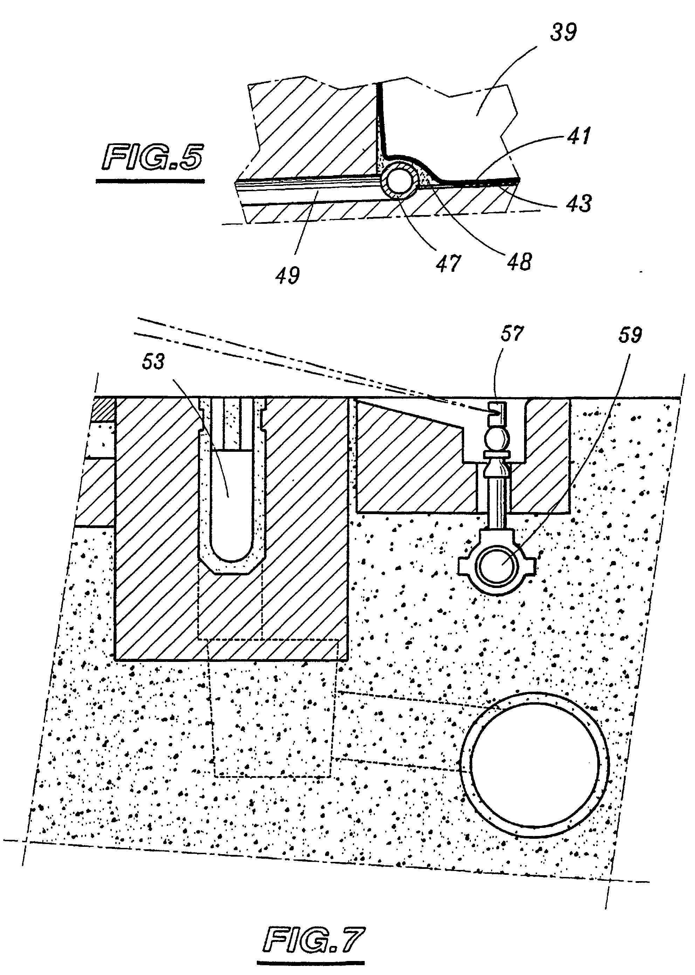

Les figures 6 et 7 illustrent plus particulièrement l'installation d'arrosage 55 de la piste 1. Cette installation comprend des buses à jets plats 57 montées au ras de la surface de la piste. Ces buses 57 sont disposées en quinconce de chaque côté de la piste, c'est-à-dire qu'une buse 57a située d'un côté de la piste se trouve au milieu de deux buses mitoyennes 57b situées de l'autre côté de la piste.

Ces buses 57 sont reliées par groupe de six à des rampes terminales 59 enterrées parallèlement aux caniveaux de récupération 51, 53 et raccordées à des conduites d'alimentation 61 par un système 60 de vannes comportant notamment une électrovanne de télécommande de vidange.

L'ensemble des canalisations 59, 61 est monté avec une pente continue vers un regard 62 recevant les vannes de raccordement (non représentées).

Une station 63 de récupération et d'alimentation en eau, placée en contrebas de la piste, est reliée aux caniveaux 51, 53 au moyen d'un réseau gravitaire non représenté. Cette station 63 comprend des moyens de récupération, de recyclage de l'eau, en particulier des moyens de détartrage, des dispositifs de sécurité et notamment antigels, et des moyens d'alimentation des conduites principales 61 ainsi que des moyens de commande de l'arrosage de la piste, moyens qui sont tous connus en soi. Les conduites 61 sont reliées à la station 63.

La piste 1 présente en surface trois revêtements différents choisis pour leur coefficient d'adhérence à l'état mouillé.

Le coefficient d'adhérence de l'enrobé à l'état mouillé est de 0,9, correspondant à celui d'un revêtement routier standard. La basaltine polie a un coefficient d'adhérence à l'état mouillé de 0,5, correspondant au coefficient d'adhérence de la neige tassée. Les pavés de verre à reliefs ont un coefficient d'adhérence à l'état mouillé de 0,2, qui correspond au coefficient d'adhérence de la glace. En effet, la forme des reliefs (en calotte sphérique) permet au pneu de n'avoir qu'une faible surface de contact avec le pavé. La dimension et donc le nombre de calottes sphériques par pavé sont choisis pour garantir une surface portante suffisante sans être trop importante, et ainsi obtenir le coefficient de 0,2 souhaité.

Pour pouvoir parvenir à un coefficient d'adhérence de 0,2 sur les pavés de verre 7, il faut également maintenir à leur surface un film d'eau suffisant pour assurer l'humidification nécessaire. Les reliefs ne doivent pas pour autant être submergés ce qui induirait des phénomènes indésirables d'aquaplanage. La hauteur et l'espacement des reliefs sont calculés pour obtenir ce résultat en combinaison avec un réglage adéquat de l'arrosage.

L'arrosage doit également consister en une pulvérisation suffisamment fine, pour ne pas créer de flaques, et suffisamment uniforme pour que la totalité de la surface de la piste soit mouillée.

La piste 1 a, par exemple, une longueur totale de 300 mètres, la bande 25 a une longueur de 10 mètres et une largeur de 2,5 mètres. La bande 25 étant la moins large, les bandes 4, 11, 17, 21, 25 ont donc toutes une largeur suffisante pour pouvoir tester tous les véhicules automobiles. Les bandes 4, 11, 15, 17, 21, 25 et la zone 26 peuvent donc être considérées indépendamment comme des zones d'essai.

Les reliefs 23 des pavés 7 étant disposés en quinconce dans le sens des déplacements des véhicules, tout effet de rainures est évité.

Lorsque l'arrosage est adéquatement réglé, on peut procéder au test d'un véhicule. Si on lance une voiture suivant le trajet indiqué par la flèche F1 sur la figure 1, elle peut successivement effectuer des freinages sur les zones 11, 15, 21 et 25. Elle rencontrera les transitions neige tassée/glace, glace/revêtement routier sous les quatre roues.

Si elle suit le trajet indiqué par la flèche F2, elle pourra successivement effectuer des freinages sur les zones 11, 15, 21 et un freinage à cheval sur les zones 25, 26. Cette trajectoire permet donc d'effectuer une mesure différentielle entre les roues droites et gauches du véhicule, les roues droites freinant en fin de trajet sur un revêtement simulant la neige tassée et les roues gauches freinant sur un revêtement routier classique. Une telle trajectoire permet donc de simuler en fin de parcours la présence de neige tassée uniquement sous les roues droites.

Si la voiture suit le trajet indiqué par la flèche F3, la voiture sera successivement à cheval sur les bandes 11, 4, puis 15, 17, puis passera totalement sur la zone 26. Ce trajet permet de simuler la présence de neige tassée sous les roues droites du véhicule et de glace sous les roues gauches du véhicule, puis d'alterner ces revêtements entre les roues gauches et droites, et enfin d'effectuer un freinage avec les quatre roues sur un revêtement routier classique.

Un tel trajet permet donc d'effectuer des mesures différentielles symétriques simulant la présence de revêtements différents sous les roues droites et gauches et ainsi de mieux connaître le comportement d'un véhicule.

On conçoit, grâce à ces trois exemples, le nombre de possibilité de mesures différentes offerte par la piste 1.

La structure des zones revêtues de pavés de verre 7 permet de drainer l'eau qui pourrait s'infiltrer entre les pavés, par exemple en cas de fracture d'un pavé. Cette eau est drainée par la couche 39 et récupérée par les drains longitudinaux 47, puis renvoyée vers les caniveaux 51, 53 grâce aux conduites d'évacuation 49.

La couche 41 de Géotextile ^{T.M} permet d'éviter l'adhérence de la couche 39 avec la couche 43 et limiter ainsi les problèmes liés aux dilatations thermiques différentielles.

L'eau provenant du drainage de la couche 39 ainsi que les eaux de ruissellement sont collectées par les caniveaux longitudinaux 51, 53 puis renvoyées grâce à un réseau gravitaire non représenté vers la station 63, qui traite ces eaux et qui, éventuellement grâce à un appoint, les renvoie sous pression vers les buses. ce traitement comprend des opérations de déshuilage, déssablage et surtout de détartrage pour éviter que des impuretés ne soient déposées par l'arrosage sur les revêtements, ce qui conduirait à une modification des coefficients d'adhérence respectifs.

L'arrosage s'effectue au ras du sol et de manière progressive pour ne pas gêner la visibilité des pilotes lors des essais. C'est-à-dire que l'arrosage précède la voiture lorsqu'elle parcourt la piste afin que le moins d'eau possible ne soit projetée sur le pare-brise du véhicule. Ceci est obtenu en commutant progressivement, grâce aux systèmes de vanne 60, les rampes terminales 59.

La pente et l'électrovanne de vidange des canalisations 59 et 61 ainsi que les dispositifs de sécurité de la station 63 permettent d'assurer la sécurité de l'installation d'arrosage en cas de gel.

Les fines bandes 9 et 19 de basaltine bordant les bandes 4 et 15 de pavés de verre 7 assurent une transition latérale progressive du coefficient d'adhérence entre les pavés de verre et l'enrobé dans un but de sécurité. En effet, si un pilote perd le contrôle de son véhicule et quitte sa trajectoire rectiligne, une variation soudaine des coefficients d'adhérence (de 0,2 à 0,9) se traduirait par une reprise brutale d'adhérence du véhicule qui pourrait provoquer un renversement de celui-ci.

Les boudins de sécurité 31 sont des boudins de grand diamètre (1 m de diamètre et environ 10 m de long), étanches, gonflés d'air à basse pression (0,3 à 0,5 bar) et fixés au sol par l'intermédiaire de câbles élastiques. En cas de choc d'un véhicule automobile, l'absorption initiale est effectuée par la fixation élastique d'un boudin avant que celui-ci n'agisse à la manière des coussins gonflables de sécurité utilisés dans les véhicules automobiles.

Les dimensions indiquées et les matériaux de revêtement utilisés dans l'exemple décrit sont nullement limitatifs et peuvent varier au gré des modes de réalisation.

Bien entendu, pour procéder à certains essais spécifiques, la piste peut comporter des zones inclinées en dévers et/ou longitudinalement.

## Revendications

1. Piste d'essai (1) pour véhicules, du type comprenant une installation d'arrosage (55) et des zones ayant chacune une adhérence prédéterminée à l'état mouillé (4, 11, 15, 17, 21, 25, 26), la surface de la piste étant continue sur toute sa largeur, **caractérisée en ce qu'**au moins un tronçon de la piste (3a, 3b) est partagé, par au moins une ligne longitudinale (2), en au moins deux bandes d'essai (4, 11, 15, 17) présentant des adhérences différentes et prédéterminées à l'état mouillé et constituant chacune une desdites zones.

2. Piste d'essai (1) selon la revendication 1, **caractérisée en ce qu'**au moins une première bande d'essai (4, 11, 15, 17) est prolongée, dans au moins un sens, sur au moins une partie de sa largeur, par une seconde bande d'essai (17, 15, 21, 25, 26) ayant une adhérence différente à l'état mouillé.

3. Piste d'essai (1) selon la revendication 2, **caractérisée en ce que** ladite seconde bande (21) ne s'étend que sur une partie de la largeur de ladite première bande d'essai (15), et **en ce que** ladite première bande d'essai est prolongée, sur une autre partie de sa largeur, par une troisième bande d'essai (26) ayant la même adhérence à l'état mouillé que la première bande d'essai.

4. Piste d'essai (1) selon l'une quelconque des revendications 1 à 3, **caractérisée en ce que** les deux bandes d'essai (15, 17) sont prolongées, dans au moins un sens, sur un deuxième tronçon de la piste, sur au moins une partie de leur largeur, par deux secondes bandes d'essai (21, 26), **en ce que** l'une des bandes d'essai (15) et son prolongement (21) présentent en surface les mêmes adhérences à l'état mouillé, et **en ce que** l'autre bande d'essai (17) et son prolongement (26) présentent des adhérences différentes à l'état mouillé.

5. Piste d'essai (1) selon l'une quelconque des revendications 1 à 3, **caractérisée en ce que** les deux bandes d'essai (4, 11) sont prolongées, dans au moins un sens, sur un deuxième tronçon de la piste (3b), sur au moins une partie de leur largeur, en deux secondes bandes d'essai (15, 17), et **en ce que** chaque bande d'essai (4, 11) et son prolongement (15, 17) présentent des adhérences différentes à l'état mouillé.

6. Piste d'essai (1) selon la revendication 5, **caractérisée en ce que** les adhérences à l'état mouillé des deux bandes d'essais (4, 11) du premier tronçon (3a) sont permutées dans le deuxième tronçon (3b).

7. Piste d'essai (1) selon l'une quelconque des revendications 1 à 6, **caractérisée en ce que** chacune desdites bandes d'essai (4, 11, 15, 17, 21, 25, 26) a une largeur supérieure à celle d'un véhicule à tester.

8. Piste d'essai (1) selon l'une quelconque des revendications 1 à 7, **caractérisée en ce que** l'installation d'arrosage (55) comprend une installation de recyclage, **en ce que** l'axe longitudinal médian de la piste présente une différence de niveau avec les deux bords latéraux de la piste, et **en ce qu'**un système de caniveaux (51, 53) reliés à l'installation de recyclage est disposé à proximité de la partie longitudinale de la piste située au niveau minimal.

9. Piste d'essai (1) selon la revendication 8, **caractérisée en ce qu'**au moins une zone est constituée de pavés interchangeables (7) surmontant une couche drainante (39) reliée par un système de conduites (47, 49) et de caniveaux (51, 53) à l'installation de recyclage.

10. Piste d'essai (1) selon la revendication 8 ou 9, **caractérisée en ce qu'**au moins une zone (4, 15), notamment celle constituée de pavés, comporte des reliefs (33), et **en ce que** l'installation d'arrosage (55) est réglée de telle manière que les reliefs (33) ne sont jamais submergés.

11. Piste d'essai (1) selon la revendication 10, **caractérisée en ce que** les reliefs (33) sont disposés en quinconce dans le sens de déplacement des véhicules.

12. Piste d'essai (1) selon l'une quelconque des revendications 9 à 11, **caractérisée en ce que** les pavés interchangeables sont clipsés dans une structure maillée (35) par l'intermédiaire de joints élastiques (37).

13. Piste d'essai (1) selon l'une quelconque des revendications 1 à 12, **caractérisée en ce que** certaines zones ont à l'état mouillé une adhérence sensiblement égale à celle de la glace ou à celle de la neige tassée.

14. Piste d'essai (1) selon l'une quelconque des revendications 1 à 13, **caractérisée en ce que** l'installation d'arrosage (55) comprend des moyens pour faire progresser cycliquement l'arrosage le long de la piste.

15. Piste d'essai selon la revendication 14, **caractérisé en ce que** l'installation d'arrosage (55) est adaptée pour que l'arrosage précède un véhicule se déplaçant sur la piste.

16. Piste d'essai (1) selon l'une quelconque des revendications 1 à 15 , **caractérisée en ce que** la piste est bordée de fines bandes (9, 19, 27, 29) de transition latérale progressive du coefficient d'adhérence dans un but de sécurité.

17. Piste d'essai (1) selon l'une quelconque des revendications 1 à 16, **caractérisée en ce que** la piste est bordée de boudins gonflables (31) de sécurité fixés à des câbles élastiques.

18. Piste d'essai (1) selon l'une quelconque des revendications 1 à 17, **caractérisée en ce qu'**elle comporte des zones inclinées en dévers et/ou longitudinalement.

## Patentansprüche

1. Versuchsstrecke (1) für Fahrzeuge, mit einer Beregnungsanlage (55) und Zonen (4, 11, 15, 17, 21, 25, 26), die im nassen Zustand jeweils eine vorgegebene Haftung haben, wobei die Oberfläche der Strecke über ihrer gesamten Breite kontinuierlich ist, **dadurch gekennzeichnet, dass** wenigstens ein Abschnitt (3a, 3b) der Strecke durch wenigstens eine Längslinie (2) in wenigstens zwei Versuchsstreifen (4, 11, 15, 17) unterteilt ist, die im nassen Zustand unterschiedliche vorgegebene Haftungswerte aufweisen und jeweils eine der Zonen bilden.

2. Versuchsstrecke (1) nach Anspruch 1, **dadurch gekennzeichnet, dass** wenigstens ein erster Versuchsstreifen (4, 11, 15, 17) wenigstens in einer Richtung und wenigstens auf einem Teil seiner Breite sich in Form eines zweiten Versuchsstreifens (17, 15, 21, 25, 26) fortsetzt, der im nassen Zustand eine andere Haftung aufweist.

3. Versuchsstrecke (1) nach Anspruch 2, **dadurch gekennzeichnet, dass** der zweite Streifen (21) sich nur über einen Teil der Breite des ersten Versuchsstreifens (15) erstreckt und dass der erste Versuchsstreifen sich auf einem anderen Teil seiner Breite in Form eines dritten Versuchsstreifens (26) fortsetzt, der im nassen Zustand die gleiche Haftung wie der erste Versuchsstreifen aufweist.

4. Versuchsstrecke (1) nach einem der Ansprüche 1 bis 3, **dadurch gekennzeichnet, dass** die beiden Versuchsstreifen (15, 17) sich wenigstens in einer Richtung und wenigstens auf einem Teil ihrer Breite in Form von zwei zweiten Versuchsstreifen (21, 26) in einen zweiten Abschnitt der Strecke fortsetzen, dass ferner einer (15) der Versuchsstreifen und dessen Fortsetzung (21) an der Oberfläche im nassen Zustand die gleichen Haftungswerte aufweisen und dass der andere Versuchsstreifen (17) und dessen Fortsetzung (26) im nassen Zustand unterschiedliche Haftungswerte aufweisen.

5. Versuchsstrecke (1) nach einem der Ansprüche 1 bis 3, **dadurch gekennzeichnet, dass** die beiden Versuchsstreifen (4, 11) sich wenigstens in einer Richtung und wenigstens auf einem Teil ihrer Breite in Form von zwei zweiten Versuchsstreifen (15, 17) in einen zweiten Abschnitt (3b) der Strecke fortsetzen und dass jeder Versuchsstreifen (4, 11) und seine Fortsetzung (15, 17) im nassen Zustand unterschiedliche Haftungswerte aufweisen.

6. Versuchsstrecke (1) nach Anspruch 5, **dadurch gekennzeichnet, dass** die für nassen Zustand geltenden Haftungswerte der zwei Versuchsstrecken (4, 11) des ersten Abschnitts (3a) zum zweiten Abschnitt (3b) hin vertauscht sind.

7. Versuchsstrecke (1) nach einem der Ansprüche 1 bis 6, **dadurch gekennzeichnet, dass** die Versuchsstrecken (4, 11, 15, 17, 21, 25, 26) jeweils eine Breite haben, die größer ist als die Breite eines zu testenden Fahrzeugs.

8. Versuchsstrecke (1) nach einem der Ansprüche 1 bis 7, **dadurch gekennzeichnet, dass** die Beregnungsanlage (55) eine Rückgewinnungsanlage umfasst, dass die Längsmittelachse der Strecke einen Höhenunterschied zu den beiden seitlichen Rändern der Strecke aufweist und dass ein mit der Rückgewinnungsanlage verbundenes Rinnensystem (51, 53) in der Nähe desjenigen Längsteils der Strecke angeordnet ist, der auf der niedrigsten Höhe liegt.

9. Versuchsstrecke (1) nach Anspruch 8, **dadurch gekennzeichnet, dass** wenigstens eine Zone aus austauschbaren Pflastersteinen (7) gebildet ist, die auf einer Drainageschicht 39 angeordnet sind, welche über ein System von Leitungen (47, 49) und Rinnen (51, 53) mit der Rückgewinnungsanlage verbunden ist.

10. Versuchsstrecke (1) nach Anspruch 8 oder 9, **dadurch gekennzeichnet, dass** wenigstens eine Zone (4, 15), insbesondere die aus Pflastersteinen gebildete Zone, Relieferhebungen (33) aufweist und dass die Beregnungsanlage (55) in der Weise eingestellt ist, dass die Relieferhebungen (33) nie untergetaucht sind.

11. Versuchsstrecke (1) nach Anspruch 10, **dadurch gekennzeichnet, dass** die Relieferhebungen (33) in Fahrtrichtung der Fahrzeuge gegeneinander versetzt angeordnet sind.

12. Versuchsstrecke (1) nach einem der Ansprüche 9 bis 11, **dadurch gekennzeichnet, dass** die austauschbaren Pflastersteine mittels elastischer Fugenleisten (37) in einer Gitteranordnung (35) eingerastet sind.

13. Versuchsstrecke (1) nach einem der Ansprüche 1 bis 12, **dadurch gekennzeichnet, dass** bestimmte Zonen im nassen Zustand eine Haftung aufweisen, die im wesentlichen gleich ist zur Haftung von Eis oder von zusammengedrücktem Schnee.

14. Versuchsstrecke (1) nach einem der Ansprüche 1 bis 13, **dadurch gekennzeichnet, dass** die Beregnungsanlage (55) eine Einrichtung zum Steuern einer entlang der Strecke zyklisch fortschreitenden Beregnung umfasst.

15. Versuchsstrecke (1) nach Anspruch 14, **dadurch gekennzeichnet, dass** die Beregnungsanlage (55) dazu ausgebildet ist, dass die Beregnung einem auf der Strecke fahrenden Fahrzeug voreilt.

16. Versuchsstrecke (1) nach einem der Ansprüche 1 bis 15, **dadurch gekennzeichnet, dass** zu Sicherheitszwecken die Strecke durch schmale Streifen (9, 19, 27, 29) berandet ist, die einen fortschreitenden seitlichen Übergang des Haftungsbeiwerts bewirken.

17. Versuchsstrecke (1) nach einem der Ansprüche 1 bis 16, **dadurch gekennzeichnet, dass** die Strecke durch aufblasbare Sicherheitswülste (31) berandet ist, die an elastischen Seilen befestigt sind.

18. Versuchsstrecke (1) nach einem der Ansprüche 1 bis 17, **dadurch gekennzeichnet, dass** sie in Quer- und/oder Längsrichtung geneigte Zonen umfasst.

## Claims

1. A test track (1) for vehicles, of the type comprising a spraying installation (55) and zones each having a predetermined adhesion capacity when wet (4, 11, 15, 17, 21, 25, 26), the surface of the track being continuous over its entire width, **characterised in that** at least one section of the track (3a, 3b) is divided, by at least one longitudinal line (2), into at least two test strips (4, 11, 15, 17) having different predetermined adhesion capacities when wet and each forming one of the said zones.

2. A test track (1) according to claim 1, **characterised in that** at least one first test strip (4, 11, 15, 17) is extended, in at least one direction and over at least part of its width, by a second test strip (17, 15, 21, 25, 26) having a different adhesion capacity when wet.

3. A test track (1) according to claim 2, **characterised in that** the said second strip (21) only extends over part of the width of the said first test strip (15), and **in that** the said first test strip is extended, over another part of its width, by a third test strip (26) having the same adhesion capacity when wet as the first test strip.

4. A test track (1) according to any one of claims 1 to 3, **characterised in that** the two test strips (15, 17) are extended, in at least one direction over a second section of the track and over at least part of their width, by two second test strips (21, 26), **in that** one of the test strips (15) and its extension (21) have the same surface adhesion capacities when wet, and **in that** the other test strip (17) and its extension (26) have different adhesion capacities when wet.

5. A test track (1) according to any one of claims 1 to 3, **characterised in that** the test strips (4, 11) are extended, in at least one direction over a second section of the track (3b) and over at least part of their width, by two second test strips (15, 17), and **in that** each test strip (4, 11) and its extension (15, 17) have different adhesion capacities when wet.

6. A test track (1) according to claim 5, **characterised in that** the adhesion capacities of the two test strips (4, 11) of the first section (3a) when wet are interchanged in the second section (3b).

7. A test track (1) according to any one of claims 1 to 6, **characterised in that** each of the said test strips (4, 11, 15, 17, 21, 25, 26) has a greater width than that of a vehicle to be tested.

8. A test track (1) according to any one of claims 1 to 7, **characterised in that** the spraying installation (55) comprises a recirculating installation, **in that** the longitudinal central axis of the track is at a different level from the two lateral edges of the track, and **in that** a system of channels (51, 53) connected to the recirculating installation is arranged in proximity to the longitudinal portion of the track located at the minimum level.

9. A test track (1) according to claim 8, **characterised in that** at least one zone is formed by interchangeable paving blocks (7) placed on top of a drainage layer (39) connected to the recirculating installation by a system of conduits (47, 49) and channels (51, 53).

10. A test track (1) according to claim 8 or 9, **characterised in that** at least one zone (4, 15), in particular that formed by paving blocks, comprises reliefs (33), and **in that** the spraying installation (55) is controlled so that the reliefs (33) are never submerged.

11. A test track (1) according to claim 10, **characterised in that** the reliefs (33) are in a staggered arrangement in the direction of travel of the vehicles.

12. A test track (1) according to any one of claims 9 to 11, **characterised in that** the interchangeable paving blocks are clipped into a mesh structure (35) by means of resilient seals (37).

13. A test track (1) according to any one of claims 1 to 12, **characterised in that** certain zones have an adhesion capacity when wet which is substantially equal to that of ice or packed snow.

14. A test track (1) according to any one of claims 1 to 13, **characterised in that** the spraying installation (55) comprises means for carrying out spraying cyclically along the track.

15. A test track (1) according to claim 14, **characterised in that** the spraying installation (55) is adapted so that spraying precedes a vehicle moving along the track.

16. A test track (1) according to any one of claims 1 to 15, **characterised in that** the track is edged with fine strips (9, 19, 27, 29) which, for safety reasons, have a progressive lateral transition of the coefficient of adhesion capacity.

17. A test track (1) according to any one of claims 1 to 16, **characterised in that** the track is edged with inflatable safety tubes (31) fixed to resilient cables.

18. A test track (1) according to any one of claims 1 to 17, **characterised in that** it comprises zones inclined obliquely and/or longitudinally.
